# EUROPÄISCHE PATENTANMELDUNG

(11) **EP 3 146 835 A1**
(43) Veröffentlichungstag der Anmeldung: **29.03.2017**
(21) Anmeldenummer: 16190286.1
(22) Anmeldetag: 23.09.2016
(51) Int. Cl.: A01G 13/02

(54) **BIOLOGISCH ABBAUBARE WUCHSHÜLLE**

(30) Priorität: 23.09.2015 DE 102015116080
(71) Anmelder: Castus International GmbH, 88453 Erolzheim (DE)
(72) Erfinder: Hoffmann, Jürgen, 88416 Ochsenhausen (DE); Lukat, Claus, 88416 Ochsenhausen (DE)
(74) Vertreter: Otten, Roth, Dobler & Partner mbB Patentanwälte

(57) **Zusammenfassung**

Die Erfindung zeigt eine Wuchshülle als Schutzhülle für Pflanzen, wobei die Wuchshülle einen Mantel, einen vom Mantel umgebenen Innenraum sowie den Mantel durchbrechende Ausnehmungen umfasst, wobei dieses dadurch gekennzeichnet wird, dass die Wuchshülle aus einem vollständig biologisch abbaubaren Material besteht.

## Beschreibung

Die Erfindung betrifft eine Wuchshülle für die Aufzucht von Stammgewächsen, beispielsweise Bäumen in der Forstwirtschaft.

Wuchshüllen verringern Ausfälle, beschleunigen das Höhenwachstum, schützen vor Wildverbiss bzw. Verfegen sowie Mäuseschäden und erleichtern die Kultursicherung. Der Schlüssel des Erfolgs ist v.a. das sich in der Hülle einstellende günstige Mikroklima durch höhere Temperatur und Luftfeuchtigkeit. Wuchshüllen eignen sich für Pflanzen vom Sämling bis zur mehrjährigen Pflanze.

Aus dem Stand der Technik ist eine viereckige Wuchshülle der Herstellerfirma PlantaGard bekannt. Sie besteht aus Polypropylen und verfügt über seitliche Belüftungslöcher, die einer möglichen Schimmelbildung in der Hülle durch Luftzirkulation entgegen wirken. Der obere Rand am Abschluss der Hülle ist gefalzt. Damit sollen Scheuerschäden an der Rinde der gepflanzten Bäumchen vermieden werden. Aufgrund etlicher Hinweise aus der Praxis auf eine mangelhafte Verrottung der Hüllen nach angemessener Zeit hat PlantaGard die Zusammensetzung der Polypropylen-Mischung weiter entwickelt. Ferner existieren im Stand der Technik Wuchshüllen der Firma Tubex.

Nachteilig am Stand der Technik ist die nach wie vorgegebene mangelhafte biologische Abbaubarkeit. Zusätzlich ist die Handhabung, insbesondere beim Anbringen an den zu schützenden Pflanzen oftmals sehr komplex bzw. sperrig und behindert den Arbeitsablauf.

Aufgabe der Erfindung ist es, die biologische Abbaubarkeit einer Wuchshülle zu verbessern und bevorzugt die Anwendbarkeit zu vereinfachen.

Diese Aufgabe wird durch eine Wuchshülle der nachfolgend beschriebenen Art gelöst.

Bei einer Ausführungsvariante der Erfindung ist die Wuchshülle aus einem vollständig kompostierbaren Kunststoff-Compound hergestellt.

Es ist z.B. vorgesehen, dass das biologisch abbaubare Material ein Kunstoff-Composit, insbesondere eine Mischung aus dem bekannten Kunststoff ecoflex® und Polymilchsäure, ist. Diese Materialien lassen sich gut verarbeiten und mit herkömmlichen Kunststoffprozessen, beispielsweise Spritzgießen in Form bringen.

Exemplarisch ist vorgesehen, dass der Mantelteil zumindest teilweise durch das biologisch abbaubare Material ecovivo® gebildet ist. Die vollständige oder zumindest teilweise Ausbildung aus diesem Material bringt die bevorzugte biologische Abbaubarkeit mit sich. Wenn nur Teile der Wuchshülle entsprechend hergestellt werden, kann eine Kombination mit anderen, ggf. langsamer abbaubaren Materialien die statischen Eigenschaften der Wuchshülle bevorzugt beeinflussen (z.B. durch Holzanteile oder Hanfanteile).

Bei einer bevorzugten Weiterbildung der Erfindung ist die Wuchshülle aus einem Karton-Material gefertigt, welches insbesondere wenigstens zwei miteinander verleimte Lagen aufweist.

Die Lagen bestehen zum Beispiel aus einem Kraftliner, d.h. aus einer Papierart, die auch als Deckenpapier für Pappe, wie etwa für Wellpappe oder Vollpappe, verwendet wird. Der Kraftliner umfasst im Allgemeinen einen gebleichten oder ungebleichten Kraftzellstoff (Sulfatzellstoff) mit besonders hohem Anteil langer Fasern. Kraftliner sind in vorteilhafter Weise meist von hoher Festigkeit und widerstandfähig gegen Feuchtigkeit. Ihr Flächengewicht beträgt in der Regel mindestens 120 g/m². Sie können vollständig oder nahezu vollständig aus natürlichem Material wie zum Beispiel Holzfasern oder Hanffasern gefertigt sein. Die Materialien der Kraftliner sind in der Regel zu 100% recycelbar und können gegebenenfalls auch mit dem Altpapier entsorgt werden. Beispielsweise liegen die Dehnungsteifigkeiten des Kraftliner-Materials bei 10 kNm/g bis 15 kNm/g (MD: machine direction, in Längsrichtung) bzw. bei ca. 5 kNm/g (CD: cross-machine direction, in Querrichtung).

Um die Hüllen vor Umdrücken durch Schnee oder Begleitvegetation zu bewahren, sind sie mit einem Stab, der in den Boden gerammt wird, zu befestigen. Als Stäbe bieten sich sog. Tonkinstäbe oder Metallpfähle oder Robinienpfähle an. Die Tonkinstäbe aus Bambus sind sehr instabil und nehmen oft schon beim Einrammen Schaden oder gehen zu Bruch. Metallpfähle sind am robustesten und lassen sich wiederverwenden, können aber zu Schäden an Forstgeräten (Freischneider, Motorsäge) oder zu Unfällen bei Stürzen während der Waldarbeit führen. Außerdem können die Pflanzenwurzeln um die Metallstäbe herum wachsen, was ein späteres Entfernen schwierig macht. Auch wurde beobachtet, dass durch das relativ hohe Eigengewicht der Stäbe die Hüllen umgedrückt wurden.

Bei einem bevorzugten Ausführungsbeispiel ist die Wuchshülle so in der Erde befestigbar, dass der Mantel über der Erde liegt. Auf diese Weise ist es für Mikroorganismen im Boden schwieriger, die Wuchshülle zu erreichen und sodann mit dem Zersetzungsprozess zu beginnen, sodass folglich die Wuchshülle länger halten kann. Ferner steht die Wuchshülle gegebenenfalls nicht ständig in Kontakt mit der Bodenfeuchtigkeit, sodass mit der Zeit doch eine Aufweichung des Materials zu befürchten wäre.

Ein Ausführungsbeispiel der Erfindung weist daher eine innenliegende Aufnahme oder innenliegende Befestigungsmittel für entsprechende Stäbe auf, sodass Wuchshülle und Stab ein sich gegenseitig stabilisierendes System bilden. Alternativ oder ergänzend kann ein entsprechender Stab auch außenliegend aufgenommen oder befestigt werden.

Die Ausnehmungen können bei einer Ausführungsform der Erfindung grundsätzlich verschiedene Formen aufweisen, insbesondere kann es sich um Schlitze, tropfenförmige oder kreisförmige Ausnehmungen handeln. Auch deren Verteilung auf der Manteloberfläche kann verschieden gewählt sein. Neben regelmäßigen geometrischen Anordnungen oder geometrischen Anordnungen mit einfacher Struktur kann es sich auch um ein gesprenkeltes Muster, z.B. mit zufällig oder quasi-zufällig angeordneten Ausnehmungen, handeln.

Bei einem Ausführungsbeispiel der Erfindung können die Ausnehmungen auf verschiedene Art und Weise angeordnet werden, um eine möglichst gleichmäßige Belüftung und Belichtung zu erreichen. Bei einer besonders bevorzugten Weiterbildung der Erfindung sind die Ausnehmungen helixartig um den Mantel herum angeordnet. Denkbar ist auch, dass die Ausnehmungen in Gruppen angeordnet werden. Diese Gruppen können jeweils zum Beispiel parallel zur Längsrichtung der Mantelhülle verlaufen. Bildet der Mantel zum Beispiel annähernd ein zylindrisches Gebilde, oder kann annähernd wie ein Zylinder geformt sein, so können die einzelnen Gruppen parallel zur Mittenachse des Zylinders ausgerichtet werden. Die Gruppen untereinander können wiederum winklig um die Längsachse der Mantelhülle verschoben sein.

Auf diese Art und Weise wird erreicht, dass die Wuchshülle aus verschiedenen Richtungen senkrecht zur ihrer Längsachse belüftet und auch belichtet werden kann, wobei sich diese Ausnehmungen entlang der gesamten Längsrichtung wiederum erstrecken können. Je kleiner der Gang der Helix gewählt wird, desto mehr Belüftungs- / Belichtungslöcher sind über die Mantelfläche verteilt.

Bei einer ebenfalls besonders bevorzugten Weiterbildung der Erfindung kann ein biologisch abbaubarer Karton und/oder ein Kraftliner-Papier eingesetzt werden, der zum einen ein notwendiges Maß an Stabilität liefert, zum anderen aber auch besonders umweltfreundlich und sehr gut abbaubar und kompostierbar ist. Insbesondere können dabei Materialien eingesetzt werden, die unter folgenden Handelsnamen angeboten werden:
- Mondipapier mit Leim LA 952: 3-, 4- oder 5-lagig und/oder
- Cutpall-Papier mit Leim FB 7260: 3-, 4- oder 5-lagig und/oder
- Mondi Aqua Protect-Papier mit einer Flächendichte von ca. 200g/m² mit Leim Bostik Aquagrip TC201, 4- oder 5-lagig.

Die einzelnen Lagen aus Karton werden mit dem oben angegebenen Leim jeweils verleimt. Als Leim können zum Beispiel stärkebasierter Leim bzw. wässrige Lösungen synthetischer Polymere (wie z.B. Bostik Aquagrip TC201) verwendet werden.

Mit steigender Anzahl der Lagen erhöht sich grundsätzlich die Stabilität der Wuchshülle, aber auch ihr Preis. Zum anderen benötigt in der Regel ein dickeres Material mehr Zeit um biologisch abgebaut zu werden. Hier ist eine Optimierung der Dicke bezüglich beider Faktoren vorteilhaft.

Bei einer Ausführungsform der Erfindung können aber auch die Mittel zur Befestigung des Stützstabs entsprechend biologisch abbaubar ausgebildet werden, und zwar selbst dann, wenn hierfür ein Kabelbinder eingesetzt wird. Als besonders umweltfreundliches Material wird hierzu ein biologisch abbaubarer Kunststoff, z.B. Polyester, vorgeschlagen, wie er zum Beispiel unter dem Handelsnamen "SES Quick Bio" (biologisch abbaubar gem. Norm NF EN 13432: 2000 und ASTM D6400:2004) erhältlich ist.

Diese Materialien, aus denen die Wuchshüllen bzw. die Befestigungsmittel gefertigt werden können, zeichnen sich zunächst dadurch aus, dass sie die notwendige Stabilität, auch bei wechselnden Witterungseinflüssen aufweisen. Darüber hinaus sind sie mit der Zeit aber auch gut abbaubar und praktisch vollständig zersetzbar, hinterlassen also zumindest keine nennenswerten Rückstände.

Um eine Wuchshülle gem. der Erfindung bzw. gem. einem Ausführungsbeispiel der Erfindung herzustellen, ist es vorteilhaft, die Ausnehmungen in die noch nicht verleimten Lagen einzubringen. Die Ausnehmungen sind in der Regel später in der Natur Regen ausgesetzt. Werden die Ausnehmungen aber mechanisch nach dem Verleimen eingebracht, so besteht die Möglichkeit, dass durch diesen mechanischen Prozess die bereits verleimten Lagen teilweise voneinander getrennt werden, sodass dort auch Wasser eindringen kann und zum vorzeitigen Verfall der Wuchshülle führt. Werden die mit den Ausnehmungen bearbeiteten Lagen aber erst verleimt, ist der verleimte Bereich in der Regel dicht genug.

Die Erfindung wird in den nachfolgend beschriebenen Figuren exemplarisch näher erläutert.

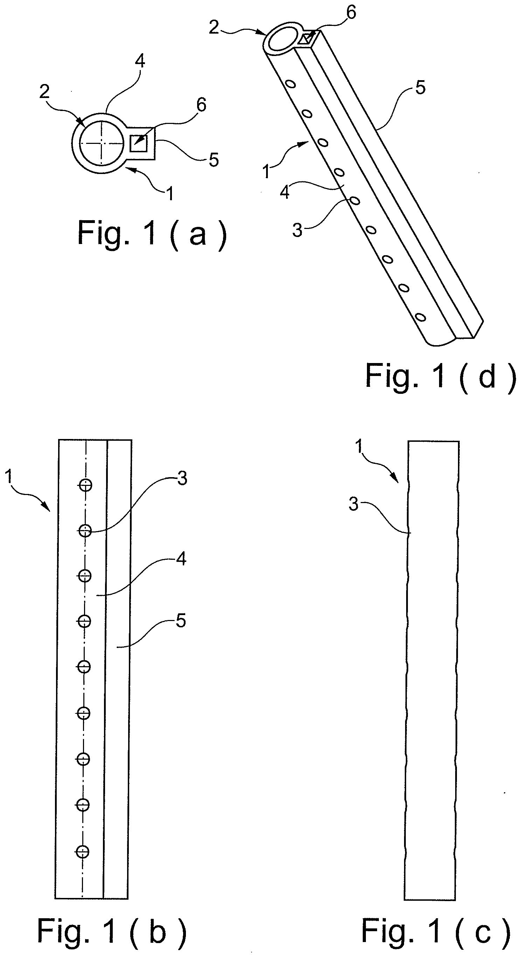

Figur 1 zeigt eine einstückig ausgebildete Wuchshülle in Draufsicht (a), seitlicher Ansicht (b), Rückansicht (c) sowie Perspektive (d).

In einer bevorzugten Ausführungsform ist die Wuchshülle 1 einstückig ausgebildet. Die Pflanze wird dabei im Inneren eines Manteltubus 2 aufgenommen und über Ausnehmungen 3 in der Mantelfläche 4 belüftet. Bevorzugt ist an der Mantelfläche 4 innenliegend oder außenliegend ein weiterer Tubus 5 angeordnet, welcher eine Öffnung 6 zur Aufnahme des Befestigungsstabs aufweist. Dieser Tubus 5 kann über seine gesamte Länge geschlossen oder mit Unterbrechungen / Öffnungen ausgebildet sein.

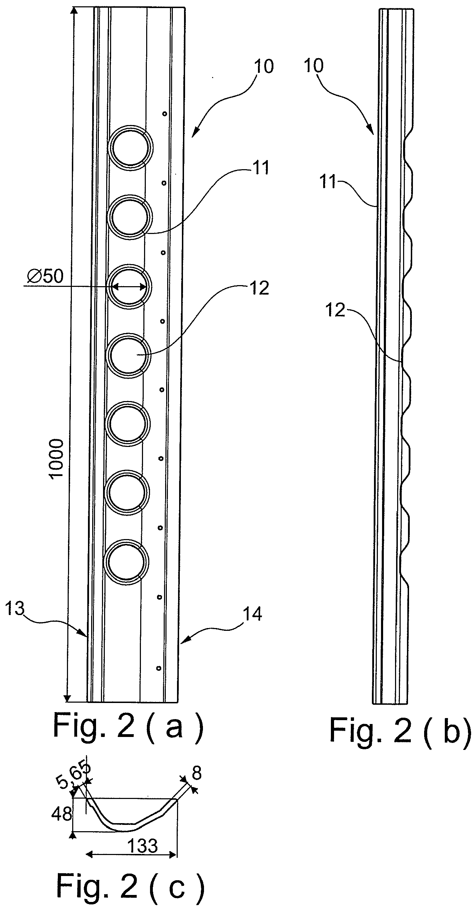

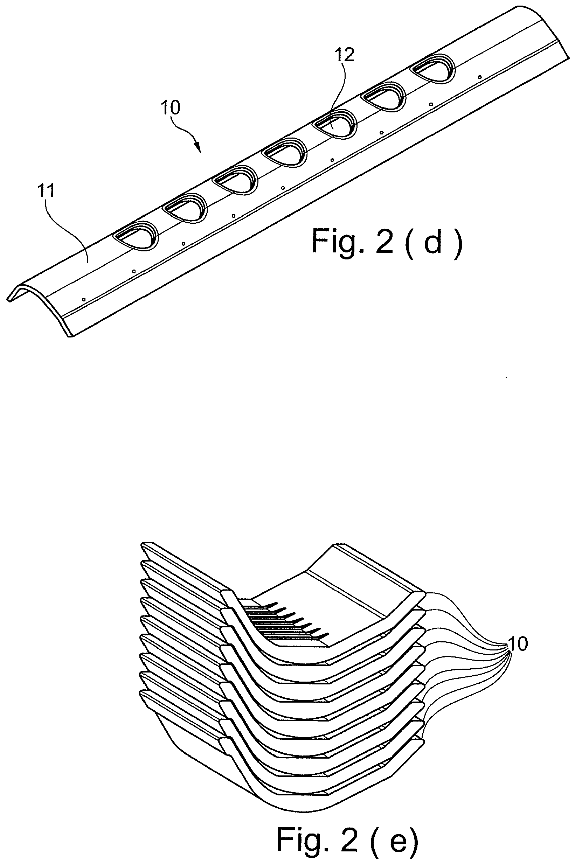

Figur 2 zeigt eine Halbschale einer mehrstückig ausgebildeten Wuchshülle in Draufsicht (a), seitlicher Ansicht (b), Perspektive (d) sowie als Lagerstapel (e).

Entsprechende Bestandteile an der Halbschale 10 sind der Mantel 11, die Ausnehmungen 12 sowie Verbindungsbereiche 13 und 14. Unterhalb Figur 2 (a) ist ein Querschnitt als Figur 2(c) dargestellt.

Die Halbschalen 10 lassen sich zur Lager- und Transportzwecken stapeln, wie in Fig. 2 (e) dargestellt.

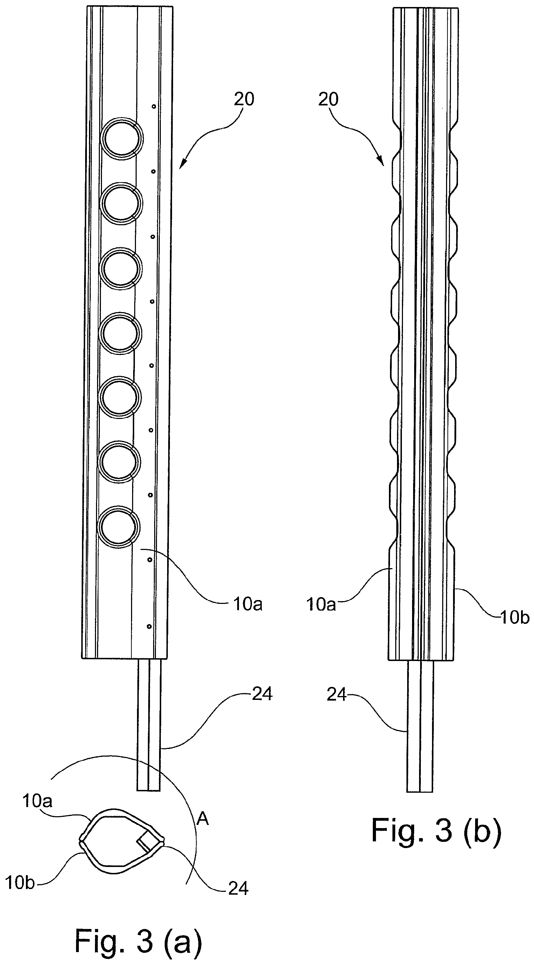

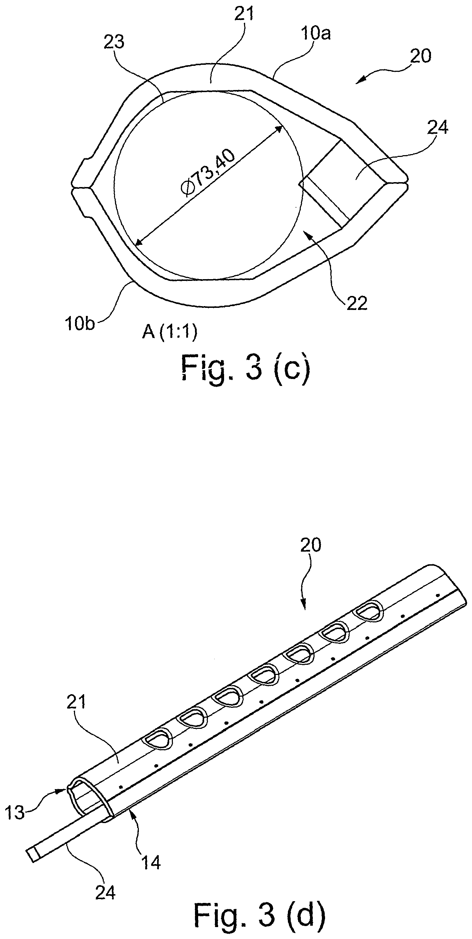

Figur 3 zeigt zwei zusammengefügte Halbschalen 10a und 10b einer mehrstückig ausgebildeten Wuchshülle 20 in Draufsicht (a), seitlicher Ansicht (b), als Schnitt (c) sowie als Perspektive (d).

Durch die symmetrische Ausbildung der Halbschalen 10 kann eine Rotation um 180° um eine Querachse genutzt werden, um die Halbschalen 10a und 10b spiegelsymmetrisch aufeinander zu legen. Im dabei entstehenden Manteltubus 21 als Innenraum 22 zwischen den Halbschalen 10a und 10b können einerseits ein Pflanzenstamm 23 sowie ein Stützstab 24 aufgenommen werden. Durch die gegenseitige Stabilisierung von Stützstab 24 und Wuchshülle 20, wird ein kompakter, aber auch standfester und widerstandsfähiger Aufbau erreicht.

In einer bevorzugten Ausführung ist vorgesehen, dass der Mantel an mindestens einer Längsseite eine Unterbrechung, vorzugsweise einen Schlitz aufweist, wobei der Mantel an der Unterbrechung zur Aufnahme einer Pflanze geöffnet werden kann.

Der einstückige Mantel 4 kann hiermit längs aufgeklappt werden, um den Stamm der Pflanze aufzunehmen und zu schützen. Beim mehrteiligen Mantel können die beiden Halbschalen 10a und 10b um den Pflanzenstamm gelegt werden, um eine einfache Anordnung zu ermöglichen.

Überdies ist vorgesehen, dass der Mantel im Bereich der Unterbrechung Mittel zur Verbindung des Mantels aufweist, wobei die Mittel den Mantel schließen und eine die Pflanze umgebende Hülle darstellen, wobei die Mittel insbesondere als lösbare Mittel oder als einmalig fixierbare Mittel ausgebildet sind.

Die Verbindungsmittel können durch einen einfachen stumpfen Stoß oder durch eingreifende Strukturen gebildet werden. Im Falle des stumpfen Stoßes muss die Hülle durch Einfassungen, z.B. Seile, Schnüre oder eine Art biologisch abbaubare Kabelbinder verbunden werden.

Insbesondere können die Mittel als formschlüssige Clipverbindung und/oder als Crimpverbindung oder dergleichen ausgebildet sein.

Eine Crimpverbindung erlaubt ein einfaches, schnelles Montieren. Die Verbindung ist sodann dauerhaft und unlösbar und kann eine stabile Hülle bereitstellen. Eine Klipverbindung, z.B. eine einen Formschluss erzeugende Nut-Feder Verbindung oder eine Rastverbindung, stellt eine dauerhafte oder im Einzelfall lösbare Verbindung dar, welche kein zusätzliches Montagewerkzeug benötigt.

Ein wirtschaftlicher Vorteil ist gegeben, indem die Mittel zur Verbindung der Mantelteile in Längsrichtung entlang der Unterbrechung mindestens einmal ihre Form wechseln, vorzugsweise um 180° rotationssymmetrisch angeordnet sind. Zum Beispiel kann eine Nut auf halber Länge zu einer Feder werden, damit lediglich ein Bauteil für beide Halbschalen 10a und 10b genutzt werden kann. Bei der Montage muss dann eine Halbschale um ihre Querachse um 180° gedreht werden, derart, dass Nut und Feder jeweils aufeinander treffen. Auch mehrere Formwechsel entlang der Längskanten der Verbindungsbereiche 13 und 14 sind möglich, so dass bei der Montage eine Verzahnung entsteht.

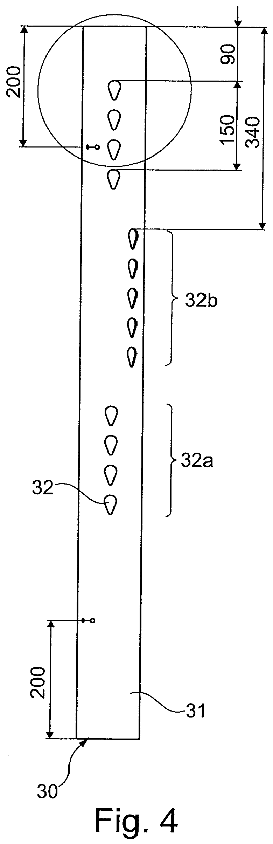

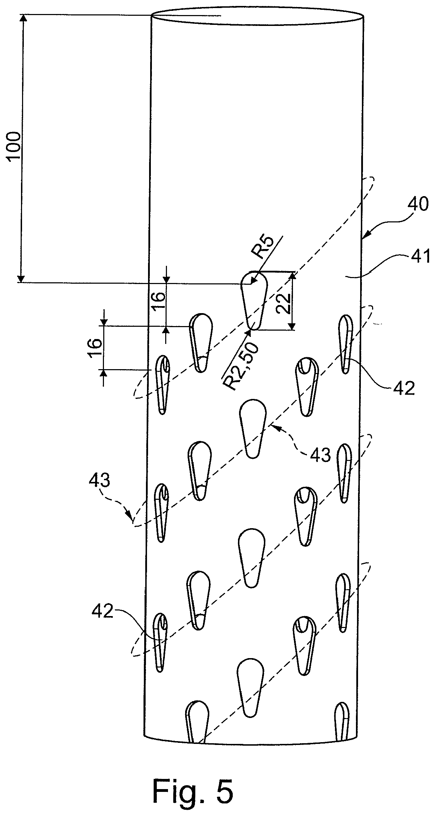

Die Figuren 4 und 5 zeigen jeweils besondere Anordnungen der Ausnehmungen in der Wuchshüllen 30, 40: In der in Figur 4 gezeigten Mantelfläche 31 sind die Ausnehmungen 32 in Gruppen 32a, 32b angeordnet, jeweils parallel zur Längsachse verlaufend, aber winklig gegeneinander versetzt. In Figur 5 wiederum sind die Ausnehmungen 42 der Wuchshülle 40 helikal um die Längsachse des Mantels 41 herum ausgerichtet; die Helix 43 ist als gedachte Linie zur Verdeutlichung dargestellt.

Die Erfindung ist nicht auf die dargestellten Ausführungsbeispiele beschränkt. Sie umfasst vielmehr alle Ausgestaltungen im Rahmen der Schutzansprüche.

### Bezugszeichenliste:

- 1: Wuchshülle
- 2: Manteltubus
- 3: Ausnehmung
- 4: Mantelfläche
- 5: Tubus
- 6: Öffnung
- 10: Halbschalen
- 10a, 10b: Halbschale
- 11: Mantel
- 12: Ausnehmungen
- 13: Verbindungsbereich
- 14: Verbindungsbereich
- 20: Wuchshülle
- 21: Manteltubus
- 22: Innenraum
- 23: Pflanzenstamm
- 24: Stützstab
- 30: Wuchshülle
- 31: Mantel
- 32: Ausnehmung
- 32a, 32b: Ausnehmungsgruppen
- 40: Wuchshülle
- 41: Mantel
- 42: Ausnehmung
- 43: Helix

## Patentansprüche

1. Wuchshülle (1, 20, 30, 40) als Schutzhülle für Pflanzen, wobei die Wuchshülle (1, 20,30, 40) einen Mantel (4, 11, 21, 31, 41), einen vom Mantel (4, 11, 21, 31, 41) umgebenen Innenraum sowie den Mantel durchbrechende Ausnehmungen (3, 12, 32, 42) umfasst, **dadurch gekennzeichnet, dass** die Wuchshülle (1, 20, 30, 40) aus einem vollständig biologisch abbaubaren Material besteht.

2. Wuchshülle (1, 20, 30, 40) nach Anspruch 1, **dadurch gekennzeichnet, dass** der Mantel (4, 11, 21, 31, 41) einstückig ausgeformt ist.

3. Wuchshülle (1, 20, 30, 40) nach Anspruch 1, **dadurch gekennzeichnet, dass** der Mantel (4, 11, 21, 31, 41) mehrteilig, insbesondere zweiteilig (10, 10a, 10b) ausgebildet ist.

4. Wuchshülle (1, 20, 30, 40) nach einem der vorgenannten Ansprüche, **dadurch gekennzeichnet, dass** das biologisch abbaubare Material einen Karton umfasst, insbesondere ein wenigstens zweilagiges Karton-Material, bei dem die Lagen miteinander verleimt sind, vorzugsweise einen Kraftliner zur Ausbildung der Lagen und/oder einen stärkebasierten Leim und/oder einen auf synthetischer Polymerbasis bestehenden Leim zum Verleimen der Lagen, wobei insbesondere 3-, 4- oder 5-lagiges oder ein mehr als 5-lagiges Karton-Material vorgesehen ist.

5. Wuchshülle (1, 20, 30, 40) nach einem der vorgenannten Ansprüche, **dadurch gekennzeichnet, dass** das biologisch abbaubare Material wenigstens an seiner Oberfläche wie folgt ausgebildet ist:
- an der äußeren Manteloberfläche wasserabweisend, insbesondere durch eine aufgebrachte Wachsschicht, und/oder
- an der inneren Manteloberfläche eine reflektierende Oberfläche und/oder eine weiße Oberfläche aufweist.

6. Wuchshülle (30, 40) nach einem der vorgenannten Ansprüche, **dadurch gekennzeichnet, dass** die wenigstens zwei Ausnehmungen (42) helixartig (43) um den Mantel (4, 11, 21, 31, 41) herum angeordnet sind.

7. Wuchshülle (30) nach einem der vorgenannten Ansprüche, **dadurch gekennzeichnet, dass** die wenigstens zwei Ausnehmungen (32) in wenigstens zwei Gruppen (32a, 32b) angeordnet sind, wobei die Ausnehmungen (32) jeder Gruppe (32a, 32b) in einer Reihe parallel zur Längsrichtung des Mantels (31) angeordnet sind und wobei wenigstens zwei der Gruppen insbesondere senkrecht zur Längsrichtung und/oder um einen Winkel zwischen 0° und 360° um die Längsachse des Mantels (4, 11, 21, 31, 41) gegeneinander verschoben sind.

8. Wuchshülle (40) nach einem der vorgenannten Ansprüche, **dadurch gekennzeichnet, dass** die Mittel zur Befestigung des Stützstabs (24) einen Kabelbinder umfassen, insbesondere aus biologisch abbaubarem Material, vorzugsweise aus einem biologisch abbaubaren Kunststoff, besonders bevorzugt aus Polyester, insbesondere aus einem Material, das unter dem Handelsnamen "SES-Quick Bio" geführt ist.

9. Wuchshülle (1, 20, 30, 40) nach einem der vorgenannten Ansprüche, **dadurch gekennzeichnet, dass** das biologisch abbaubare Material ein Kunstoff-Composit, insbesondere eine Mischung aus dem bekannten Kunststoff ecoflex® und Polymilchsäure, ist.

10. Wuchshülle (1, 20, 30, 40) nach einem der vorgenannten Ansprüche, **dadurch gekennzeichnet, dass** der Mantel (4, 11, 21, 31, 41) zumindest teilweise durch das biologisch abbaubare Material ecovivo® gebildet ist.

11. Wuchshülle (1, 20, 30, 40) nach einem der vorgenannten Ansprüche, **dadurch gekennzeichnet, dass** der Mantel (4, 11, 21, 31, 41) Mittel zur Aufnahme und/oder Befestigung eines Stützstabs (24) umfasst, wobei die Wuchshülle derart ausgebildet ist, dass der Mantel oberirdisch anbringbar ist.

12. Wuchshülle (1, 20, 30, 40) nach einem der vorgenannten Ansprüche, **dadurch gekennzeichnet, dass** der Mantel (4, 11, 21, 31, 41) an mindestens einer Längsseite eine Unterbrechung (13, 14), vorzugsweise einen Schlitz aufweist, wobei der Mantel (4, 11, 21, 31, 41) an der Unterbrechung zur Aufnahme einer Pflanze geöffnet werden kann.

13. Wuchshülle (1, 20, 30, 40) nach einem der vorgenannten Ansprüche, **dadurch gekennzeichnet, dass** der Mantel (4, 11, 21, 31, 41) im Bereich der Unterbrechung (13, 14) Mittel zur Verbindung des Mantels (4, 11, 21, 31, 41) aufweist, wobei die Mittel den Mantel (4, 11, 21, 31, 41) schließen und eine die Pflanze umgebende Hülle darstellen, wobei die Mittel insbesondere als lösbare Mittel oder als einmalig fixierbare Mittel ausgebildet sind.

14. Wuchshülle (1, 20, 30, 40) nach einem der vorgenannten Ansprüche, **dadurch gekennzeichnet, dass** die Mittel als formschlüssige Klipverbindung und/oder als Crimpverbindung oder dergleichen ausgebildet sind.

15. Wuchshülle (1, 20, 30, 40) nach einem der vorgenannten Ansprüche, **dadurch gekennzeichnet, dass** die Mittel zur Verbindung der Mantelteile (10, 10a, 10b) in Längsrichtung entlang der Unterbrechung mindestens einmal ihre Form wechseln, vorzugsweise um 180° rotationssymmetrisch angeordnet sind.

16. Verfahren zur Herstellung einer Wuchshülle (1, 20, 30, 40) nach einem der vorgenannten Ansprüche, **dadurch gekennzeichnet, dass** wenigstens zwei Lagen eines Kraftliners verwendet werden, um das Karton-Material zu fertigen, wobei in die Lagen wenigstens zwei Ausnehmungen gestanzt und die Lagen anschließend verleimt werden.
